# EUROPÄISCHE PATENTSCHRIFT

(11) **EP 0 911 185 B1**
(45) Veröffentlichungstag und Bekanntmachung des Hinweises auf die Patenterteilung: **24.03.2004**
(21) Anmeldenummer: 98119838.5
(22) Anmeldetag: 20.10.1998
(51) Int. Cl.: B60C 5/00, B60C 19/00, B29C 44/20

(54) **Kraftfahrzeugrad mit einem auf einer Felge angebrachten Reifen und einem schallabsorbierenden Einbau**
Motor-vehicle wheel with a tyre mounted on a rim and a sound-absorbing device
Roue de véhicule motorisé pourvue d'un pneu sur sa jante et d'un dispositif absorbant les bruits

(30) Priorität: 22.10.1997 DE 19746649
(43) Veröffentlichungstag der Anmeldung: 28.04.1999
(73) Patentinhaber: Continental Aktiengesellschaft, 30165 Hannover (DE)
(72) Erfinder: Dodt, Thomas Dr., 31655 Stadthagen (DE); Gauterin, Frank Dr., 31535 Neustadt am Rübenberge (DE); Schürmann, Oliver Dr., 30855 Langenhagen (DE); Veit, Ivar Dr., 64569 Nauheim (DE); Kleinhoff, Klaus, 31552 Rodenberg (DE)

(56) Entgegenhaltungen:
- EP-A- 0 029 120
- EP-A- 0 038 920
- EP-A- 0 663 306
- WO-A-97/21950
- DE-A- 3 042 350
- GB-A- 1 211 860
- US-A- 4 626 183
- US-A- 5 474 722
- PATENT ABSTRACTS OF JAPAN vol. 018, no. 383 (M-1640), 19. Juli 1994 (1994-07-19) & JP 06 106903 A (MAZDA MOTOR CORP), 19. April 1994 (1994-04-19)

## Beschreibung

Die gegenständliche Erfindung betrifft ein Kraftfahrzeugrad mit einem auf einer Felge aufgebrachten Reifen, wobei in dem von Felge und Reifen umschlossenen Innenraum, diesen ringförmig umlaufend, ein schallabsorbierendes Material aufweisender Einbau untergebracht ist.

Bekannterweise sind die während des Abrollens eines Reifens entstehenden Reifenschwingungen eine der Hauptursachen der als störend empfundenen Lärmabstrahlung. Die im Reifentorus entstehende Schalleistung ist sehr groß und erzeugt dort hohe Lärmpegel. Dabei werden die im Torusraum von Reifen auftretenden Schallschwingungen zum Teil über die Reifenseitenwände nach außen abgestrahlt und zum Teil über Kraftfahrzeugteile in den Fahrzeuginnenraum übertragen. Es ist nun bekannt, daß der Einbau von schallabsorbierendem Material im Reifen bzw. innerhalb des von Reifen und Felge gebildeten Innenraumes die abgestrahlte Schalleistung reduziert.

Eine aus dem Stand der Technik bekannte Lösung, die zudem ein Fahrzeugrad der eingangs genannten Art betrifft, befaßt sich damit, eine wirkungsvolle Reduktion der sich im Torusraum ausbildenden Schallwellen unter Bedachtnahme auf eine einfache Montage- und Demontagemöglichkeit zu erzielen. Dazu wird vorgeschlagen, das schalldämmende Material in einen flexiblen Schlauch einzubringen, der aufgrund seiner Flexibilität gemeinsam mit dem Reifen auf der Felge montiert werden kann. Die Ausführung als Schlauch bringt den Vorteil einer leichten Montage mit sich. Vor allem bei höheren Geschwindigkeiten, wo die auftretenden Fliehkräfte schon relativ groß sind, wäre aber ein geringeres Gewicht wünschenswert.

Aus der Deutschen Patentschrift DE 30 42 350 C2 ist ferner ein Fahrzeugluftreifen bekannt, dessen Innenflächen ganz oder teilweise mit einem geräuschmindernden Belag aus offenzelligem Schaumstoff ausgekleidet sind. Um eine wirksame Dämpfung des Körperschalls in den physiologisch besonders bedeutsamen Frequenzbereichen zu erzielen, wird dabei vorgeschlagen, einen speziellen, körperschalldämpfenden und vernetzten Polyurethanschaumstoff in einer bestimmten Schichtdicke zu verwenden.

In der EP-0 038 920 A1 ist geoffenbart, mit dem Reifen kraft- und momentschlüssig Schwingungsabsorber zu verbinden, die vorzugsweise im Reifeninneren angebracht sind. Diese Schwingungsabsorber können aus Gummi, Kunststoff oder dgl. bestehen und zusätzlich dämpfende Einlagen enthalten. Auch in der DE 29 46 273 A1 wird vorgeschlagen, im Innenraum eines Reifens schallabsorbierendes Material unterzubringen, wobei in dieser Druckschrift eine Anordnung des schallabsorbierenden Materials, welches insbesondere aus einem offenporigen Schaumstoff besteht, an der dem Profil gegenüber liegenden Innenfläche geoffenbart ist. Unter anderem wird ferner auch vorgeschlagen, den Innenraum des Reifens komplett mit einem offenporigen und grob struktuierten Schaumstoff aufzufüllen. Aus Festigkeitsgründen kann dabei in den Schaumstoff auch ein Tragskelett eingebettet sein. Die EP 029 120 A1 beschreibt ein Kraftfahrzeugrad gemäß dem Oberbegriff des Anspruchs 1, bzw. 2 und offenbart unterschiedliche Ausführungsformen von Schallabsorbern, die im Reifenhohlraum angeordnet werden. Es ist u.a. vorgesehen, das schallabsorbierende Material sowohl auf der Reifeninnenseite als auch direkt auf der Felge zu positionieren. In der JP 06106903 wird ebenfalls ein Schallabsorber für Fahrzeugreifen offenbart, wobei der Einbau im Feigentiefbett angeordnet ist.

Offenporiger Schaumstoff ist an und für sich besonders gut geeignet, die während der Fahrt entstehenden, sehr hohen Luftschallpegel besonders effektiv zu senken. Als Folge davon würden sich sowohl das nach Außen abgestrahlte Reifen-/Fahrbahngeräusch als auch das im Fahrzeuginneren entstehende Geräuschaufkommen vermindern. Es ist dem Fachmann bekannt, daß es eine Reihe von solchen Schaumstoffen gibt, die diese Anforderungen sehr gut erfüllen.

Darüber hinaus gibt es auch andere, äquivalent wirkende Materialien für die Schallabsorption im Reifeninneren, wie Watte, Wolle, Filz, die als Vlies oder in anderer Form Verwendung finden können.

In der Praxis treten jedoch bei den bekannten, für den Einsatz im Reifen geeigneten schallabsorbierenden Materialien unter dem Einfluß der mit steigender Fahrgeschwindigkeit auch steigenden Fliehkraft, und daher insbesondere bei höheren Geschwindigkeiten, Veränderungen in den Schallabsorptionseigenschaften auf, wobei das Ausmaß dieser Änderungen auch vom Material abhängig ist. Die Schallabsorptionseigenschaften ändern sich dabei durch die im Material. auftretenden Deformationen sowie auch infolge von Querschnittsveränderungen der Einbauten aus diesem Material.

Die Erfindung hat sich daher die Aufgabe gestellt, für derartige im Reifeninnenraum bzw. im von Felge und Reifen umschlossenen Raum unterzubringende schallabsorbierende Einbauten praktische Ausführungsmöglichkeiten aufzufinden, die bei möglichst geringem Gewicht und unter weitgehendem Vermeiden einer Erhöhung der Masse des Einbaus eine gute Fliehkraftbeständigkeit gewährleisten.

Gelöst wird die gestellte Aufgabe erfindungsgemäß dadurch, dass der aufgebrachte dehnbare Festigkeitsträger den schalldämmenden Einbau zumindest in Umfangsrichtung unter Spannung setzt.

Alternativ oder ergänzend dazu kann zur Lösung der gestellten Aufgabe auch das schallabsorbierende Material des Einbaus ein offenporiger Schaumstoff sein, dessen Poren zum Großteil eine überwiegend in eine einzige Richtung - der Umfangsrichtung des Reifens - orientierte Erstreckung besitzen.

Durch beide Lösungen wird erreicht, daß dem Einbau eine Zugfestigkeit verliehen wird, die die Fliehkraftbeständigkeit gegenüber den bekannten Lösungen deutlich erhöht ohne dabei mit einer ungünstigen Erhöhung der der Fliehkraft ausgesetzten Masse des schalldämmenden Einbaus verbunden zu sein.

Bei der Lösung mit einem zugfest ausgeführten Festigkeitsträger kann dieser die unerwünschten und ungünstigen Deformationen des schallabsorbierenden Materials verhindern oder weitgehend einschränken. Bei der zweiten erfindungsgemäßen Lösung ist das Material selbst in höherem Maße in der Lage, als "Festigkeitsträger" zu wirken.

Eine besonders bevorzugte Anordnung des Festigkeitsträgers sieht vor, daß dieser die zum Reifeninnenraum offene Fläche des schallabsorbierenden Einbaus außen und zumindest über einen Teil seines Querschnittes umhüllt. Hier handelt es sich um eine einfache, aber doch wirksame Möglichkeit, eine gute Fliehkraftbeständigkeit des schalldämmenden Einbaues sicherzustellen.

Bei einer alternativen Ausführungsform ist der Festigkeitsträger, in radialer Richtung betrachtet, in diskreten Abständen im schallabsorbierenden Einbau untergebracht. Bei dieser Ausführungsform sind zusätzlich Maßnahmen getroffen, um schon im Inneren des schallabsorbierenden Einbaus unerwünschten Deformationen entgegen zu wirken. Diese Ausführungsvariante ist-vor allem bei hohen Geschwindigkeiten von Vorteil und wird daher bevorzugt bei Reifen, die im Hochgeschwindigkeitsbereich eingesetzt werden sollen, verwendet. Bei einer weiteren Ausführungsvariante der Erfindung, die ebenfalls diese Vorteile besitzt, wird der Festigkeitsträger von im schallabsorbierenden Einbau verteilten Fasern, die überwiegend in der Umfangsrichtung des Reifens orientiert sind, gebildet.

Es gibt eine Reihe von konkreten Ausgestaltungsmöglichkeiten für den Festigkeitsträger. Eine bevorzugte Ausführungsform sieht vor, daß der Festigkeitsträger als netzartig ausgebildetes Gewebe gestaltet ist. Bei der Ausführung als Gewebe ist es besonders einfach möglich, die Zugfestigkeit in Umfangsrichtung des Reifens zu erzielen, indem die in dieser Richtung verlaufenden Fäden entsprechend stark ausgeführt werden.

Bei einer alternativen Ausführung des Festigkeitsträgers ist vorgesehen, daß dieser von einer gelochten Folie, die insbesondere isotrop ausgeführt ist, gebildet wird. Eine Folie bietet unter anderem den Vorteil, daß sie leicht handhabbar und in alle Richtung flexibel ausgeführt sein kann.

Der schallabsorbierende Einbau selbst wird, um gute schallabsorbierende Eigenschaften und etwaige unerwünschte Auswirkungen auf die sonstigen Eigenschaften des Fahrzeugrades zu verhindern, als geschlossener Ring ausgeführt.

Dabei kann der geschlossene Ring auch von einem mehrfach ringförmig gewickelten Streifen aus schalldämmendem Material gebildet sein. Die Anordnung des Festigkeitsträgers ist bei einer Ausführung als Streifen leicht möglich und auch besonders vorteilhaft, wobei es ausreichend ist, wenn der Streifen einseitig mit Festigkeitsträger, sei dieser als Folie oder als Gewebe ausgebildet, versehen wird.

Um den Festigkeitsträger mit dem Ring bzw. Streifen zu verbinden, kann auf einfache Möglichkeiten, wie Verkleben, Verschweißen oder ähnliches zurückgegriffen werden.

Auch die Montage des schallabsorbierenden Einbaus im Inneren des Reifens bzw. auf der Felge sollte leicht möglich sein. Zu diesem Zweck kann beispielsweise der schallabsorbierende Einbau bzw. der Ring vor der Montage aus mehreren Umfangssegmenten bestehen, die nach der Montage zusammengefügt werden. Um einen guten und festen Sitz des schalldämmenden Einbaues auf der Felge sicherzustellen, kann auf ein Festigkeitsträgermaterial zurückgegriffen werden, welches den schalldämmenden Einbau zumindest in Umfangsrichtung unter Spannung setzt. Zusätzlich oder als Alternative kann auch ein schalldämmendes Material verwendet werden, welches bei thermischer Behandlung schrumpft.

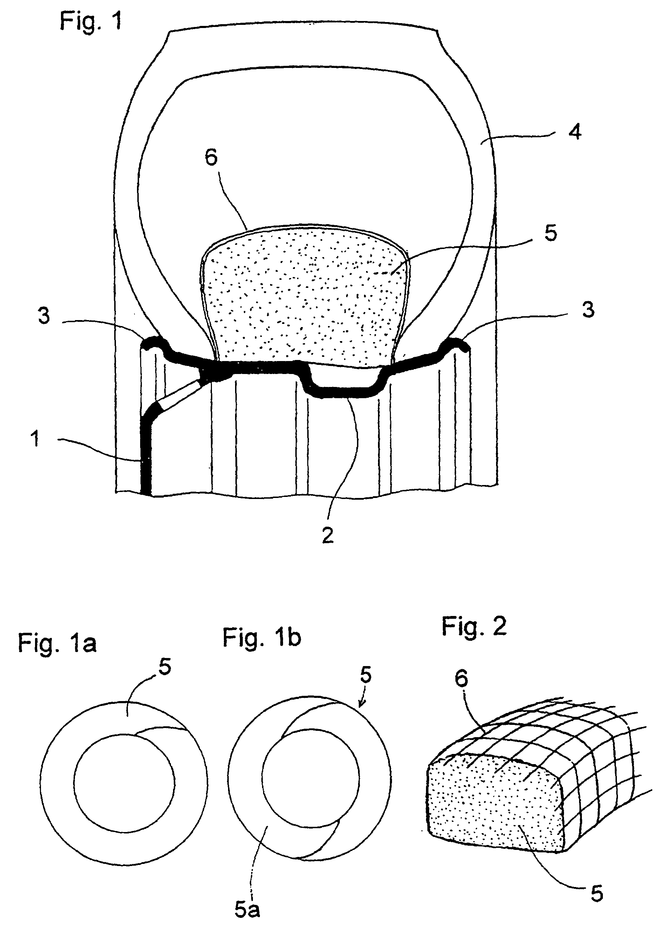

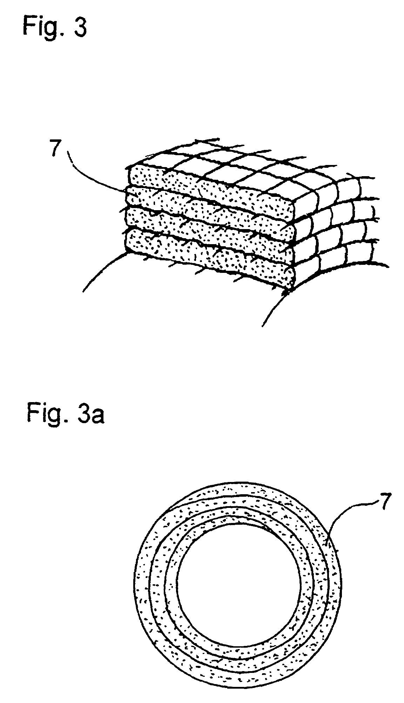

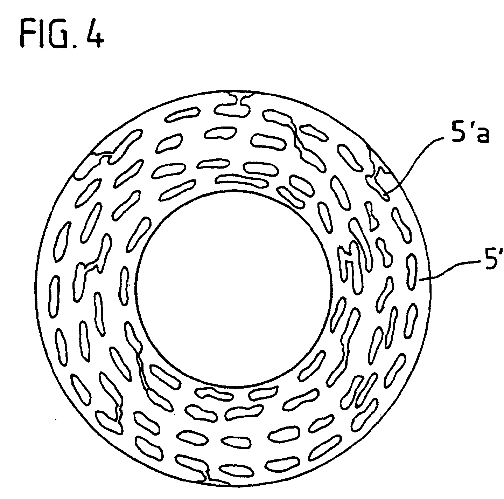

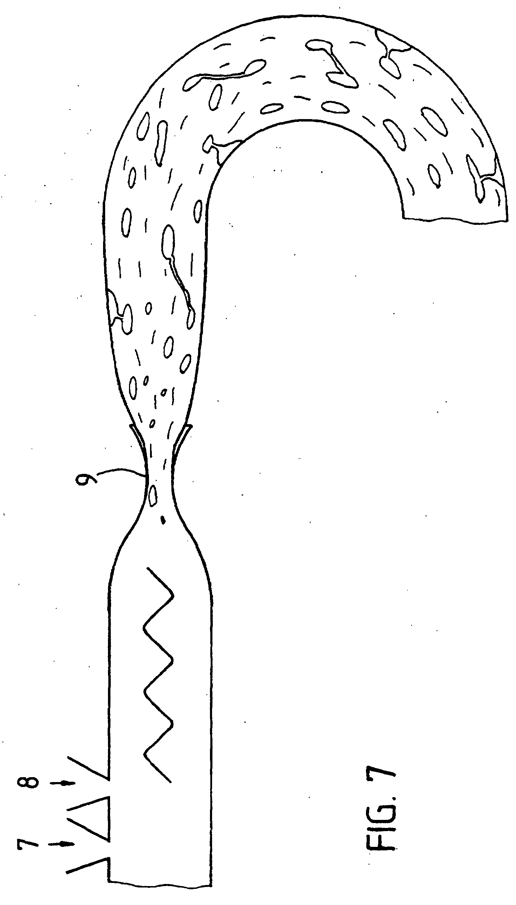

Weitere Merkmale, Vorteile und Einzelheiten der Erfindung werden nun anhand der Zeichnung, die einige Ausführungsbeispiele darstellt, näher beschrieben. Die einzelnen Zeichnungsfiguren sind schematische Darstellungen, wobei Fig. 1 einen Querschnitt durch einen Reifen, der auf einer Felge aufgebracht ist, mit einer ersten Ausführungsform der Erfindung zeigt. Fig. 1a und Fig. 1b sind Seitenansichten von Varianten derAusführung des in Fig. 1 enthaltenen schallabsorbierenden Einbaus, Fig. 2 zeigt einen Teil dieses schallabsorbierenden Einbaus in einer Kombination aus Schrägansicht und Schnittdarstellung. Fig. 3 enthält in einer zu Fig. 2 analogen Darstellung ein weiteres Ausführungsbeispiel eines schallabsorbierenden Einbaus und Fig. 3a zeigt eine geschnittene Seitenansicht dieses Einbaus. Fig. 4 bis Fig. 6 zeigen weitere Ausführungsformen von schallabsorbierenden Einbauten in Seitenansicht im Schnitt und Fig. 7 veranschaulicht schematisch eine Möglichkeit der Herstellung dieser Einbauten.

Fig. 1 zeigt eine herkömmliche Felge 1 für einen Reifen 4, welche mit einem Tiefbett 2, Felgenhörnern 3 und Wulstsitzflächen 3a versehen ist. Erwähnt sei, daß die gegenständliche Erfindung weder auf einen bestimmten Typ Luftreifen, noch auf einen bestimmten Typ Felge eingeschränkt ist.

Wie Fig. 1 nun bei einem ersten Ausführungsbeispiel der Erfindung zeigt, ist im vom Reifen 4 und von der Felge 1 umschlossenen Innenraum, die Felge 1 umlaufend und auf dieser sitzend, ein Ring 5 aus schallabsorbierendem Material untergebracht. Als Ausgangsmaterial für den Ring 5 kommen die insbesondere für eine Luftschallabsorption im Innenraum von Reifen geeigneten, offenporigen Schaumstoffe, beispielsweise PU-Schäume mit einem Gewicht um 50 kg/m³ und einem mittleren Poreninhalt von etwa 2mm^{3,} in Frage, sowie andere Luftschall gut absorbierende Materialien, wie Filz, Watte, und Materialien ähnlicher Struktur. In weiterer Folge wird zur Erläuterung der Erfindung zwar nur auf einen Schaumstoffring Bezug genommen, es sind jedoch, wie erwähnt, auch andere Materialien verwendbar.

Der Schaumstoffring 5 ist derart ausgestaltet, daß er das Tiefbett 2 zwar überdeckt, jedoch nicht ausfüllt und sich zwischen den beiden Reifenwülsten des Reifens 4 erstreckt. Vom Querschnitt her ist der Schaumstoffring 5 ansonsten so ausgeführt, daß er einen runden bis rechteckigen Querschnitt besitzt. Im dargestellten Ausführungsbeispiel ist der Querschnitt des Ringes 5 annähemd ein Rechteck mit abgerundeten Ecken.

Von besonderer Bedeutung für derartige, Luftschall absorbierende Einbauten ist eine möglichst wenig wiegende Ausführung. Es soll sichergestellt sein, daß sich das schallabsorbierende Material infolge der beim Abrollen des Reifens, insbesondere bei höheren Geschwindigkeiten, bemerkbar machenden Fliehkräften möglichst nicht bzw. wenig deformiert. Diese Fliehkraftbeständigkeit soll somit gewährleisten, daß sich im Betrieb, also beim Rollen des Reifens bzw. Fahrzeugrades, die erwünschten, ursprünglich eingestellten und beabsichtigten Schallabsorptionseigenschaften möglichst nicht ändern.

Dazu ist bei der ersten, in Fig. 1 und Fig. 2 gezeigten Ausführungsform der gegenständlichen Erfindung der Schaumstoffring 5 außen von einem akustisch transparenten, netzartig aufgebauten Gewebe 6 umgeben, welches als Festigkeitsträger wirkt. Die Umhüllung durch das Gewebe 6 kann nun eine vollständige sein oder nur dort vorgenommen werden, wo der Schaumstoffring 5 nicht auf der Felge 1 anliegt. Diese Ausführung ist insbesonders dann von Vorteil, wenn der Schaumstoffring 5 an der Felge 1 angeklebt wird. Das akustisch transparente Gewebe 6 besitzt in Umfangsrichtung zugfeste Fäden, durch die dem Schaumstoffring 5 die geforderte Fliehkraftbeständigkeit verliehen wird. Diese Fäden besonders hoher Zugfestigkeit, können beispielsweise aus Nylon oder aus einem aromatischen Polyamid bestehen. In axialer Richtung können Fäden aus einem Material geringerer Dicke vorgesehen werden, was für das Gewicht des Ringes 5 von Vorteil ist.

Die akustische Transparenz dieses als Gewebe 6 ausgeführten Festigkeitsträgers ist dann gegeben, wenn es, in eine Fläche parallel zum Verlauf der Festigkeitsträger projiziert, mehr freie Flächen als Fäden aufweist.

Mit dem Schaumstoffring 5 kann das Gewebe 6 durch Umhüllen und anschließendes Verschließen der Nahtstelle, durch Verschweißen, Verkleben oder durch gesonderte Verschlußmechanismen verbunden und nach außen hin reißsicher geschlossen werden. Auch im Bereich einer etwaigen Nahtstelle sollte, je nach Lage derselben, auf die entsprechende Schalltransparenz geachtet werden.

Dabei wird der Schaumstoffring 5, wenn er als geschlossener Ring über die Felge gezogen werden soll, vorzugsweise nach der Montage mit dem Gewebe 6, zur Gänze oder teilweise, umhüllt. Dabei kann der Schaumstoffring 5 mit dem Gewebe 6 durch Verschweißen, thermisches Verkleben und ähnliche Maßnahmen verbunden werden.

Wenn der Schaumstoffring 5 bereits vor der Montage mit dem Festigkeitsträger 6 einseitig und/oder an den Seitenflächen belegt wird, kann die Montage der Anordnung auf einfache Weise so erfolgen, daß vor dem Einbau der Ring umgekrempelt wird und in dieser Lage auf die Felge 1 gezogen wird.

Fig. 1a zeigt eine Möglichkeit der Ausführung des Schaumstoffringes 5 als ringförmig vorgeformt und zur Montage an einer Stelle schräg aufgeschnitten. In diesem Fall kann der Festigkeitsträger auch bereits vor der Montage angebracht werden. Der Spalt kann durch Verkleben wieder geschlossen werden.

Fig. 1b stellt eine Ausführungsform eines aus zwei Segmenten 15 bestehenden Ringes 5 dar. Dabei kann der Ring schon aus zwei Teilen bestehend gefertigt werden. Alternativ dazu kann ein einteilig gefertigter Ring nachträglich durch Schneiden in Segmente geteilt werden. Auch bei dieser Variante lassen sich die Teile durch Kleben oder dgl. verbinden.

Alternativ zu einem Gewebe kann als Festigkeitsträger auch eine gelochte Folie verwendet werden, die insbesondere aus Kunststoff besteht, wobei eine vorzugsweise gleichmäßige Lochung vorgesehen ist und, wie bei der Ausführung des Festigkeitsträgers als Gewebe, auf akustische Transparenz durch ein Überwiegen der Lochflächen zu achten ist. Die Folie kann analog zur Ausführung als Gewebe haftend am Schaumstoff angebracht werden.

Für eine optimale Funktionsweise der gegenständlichen Erfindung ist es wesentlich, daß der Schaumstoffring 5 möglichst dicht an der Felge 1 anliegt. Es kann daher auch von Vorteil sein, den Ring 5 auf der Felge 1 anzukleben.

Abweichend von der in Fig. 1 dargestellten Ausführungsform kann der Schaumstoffring 5 mit einer Innenkontur gefertigt werden, die der Kontur der Felge 1 mit Tiefbett und dgl. entspricht, wobei hier die Montage einer segmentierten Ausführung leicht möglich ist.

Bei einer weiteren Ausführungsform der Erfindung, die in Fig. 3 dargestellt ist, ist anstelle eines geschlossenen Schaumstoffringes ein Schaumstoffstreifen 7 entsprechender Breite mehrfach, mindestens in zwei Lagen, um die Felge 1 gewickelt. Der in mehreren Lagen gewickelte Schaumstoffstreifen 7 kann sich leichter an die Kontur der Felge 1 anpassen. Alternativ dazu kann auch mehr als ein Streifen verwendet werden, beispielsweise um die Anpassung an die Kontur der Felge zu erleichtern.

Zur Verbesserung der Fliehkraftbeständigkeit erhält der Schaumstoffstreifen ebenfalls einen Festigkeitsträger, der als Gewebe oder Folie ausgeführt sein kann. Wie bereits beschrieben, kann auch bei dieser Ausführungsform der Festigkeitsträger auf den fertig gewickelten Ring aufgebracht werden, oder es kann, was besondere Vorteile mit sich bringt, der Festigkeitsträger auf dem Schaumstoffstreifen 7, bevor dieser gewickelt wird, vorzugsweise haftend aufgebracht werden.

In jeder Lage des gewickelten Schaumstoffstreifens 7 befindet sich somit auch eine Lage Festigkeitsträger.

Bei dieser Ausführungsform ist es ausreichend, wenn nur eine der Seiten, dies sollte im gewickelten Zustand vorzugsweise die radial äußere sein, mit dem Festigkeitsträger belegt ist.

Von besonderem Vorteil ist es, wenn der Festigkeitsträgers eine gewisse Spannung auf das schallabsorbierende Material ausübt. Dies wird bei einer Ausführung als Gewebe etwa dadurch erreicht, daß in Umfangsrichtung ein sich bis zu einem bestimmten Prozentsatz dehnendes Festigkeitsträgermaterial eingesetzt wird. Nach einer weiteren bevorzugten Ausführung sollte sich dieses Material beim Überschreiten einer bestimmten Verstreckung stark versteifen. Dabei ist es von besonderem Vorteil, wenn Materialien eingesetzt werden, deren Versteifung in einem Bereich von 10 bis 60% Dehnung einsetzt.

Zum Erzeugen einer Vorspannung können solche Materialien für den Festigkeitsträger eingesetzt werden, die unter thermischer Beanspruchung schrumpfen. Auch Materialien für den Schaumstoff des Ringes, die bei thermischer Behandlung schrumpfen, sind einsetzbar. Durch jede dieser Maßnahmen wird der Schaumstoffring unter Spannung gesetzt und ein fester Sitz auf der Felge 1 unterstützt.

Bei einer weiteren möglichen Ausführungsform der Erfindung, die in Fig. 4 dargestellt ist, wirkt der Schaumstoff des Schaumstoffringes 5' selbst als Festigkeitsträger. Dazu wird der Schaumstoff derart verarbeitet, daß sich beim Aufschäumen längliche Poren 5'a bilden, die zumindest zum überwiegenden Teil in eine Richtung weisen, die im schlußendlich fertigen Produkt die Umfangsrichtung der Felge bzw. des Reifens ist. Dazu wird, wie Fig. 7 schematisch zeigt, das Rohmaterial für den Schaum, das Polymer beispielsweise bei 7 und das Schäummittel bei 8, zugeführt und während des Aufschäumens durch eine Extruderdüse 9 geführt, welche die erwähnte längliche Ausbildung der Poren 5'a bewirkt, wobei, wie ebenfalls schon erwähnt, die Extrusionsrichtung und damit die Richtung der sich in länglicher Form bildenden Poren 5'a mit der Umfangsrichtung des entstehenden Ringes 5' übereinstimmt. Der derart entstehende Schaumstoff besitzt somit eine größere Festigkeit und Steifigkeit in der Umfangsrichtung als in der radialen Richtung, womit die Fliehkraftaufnahme verbessert ist.

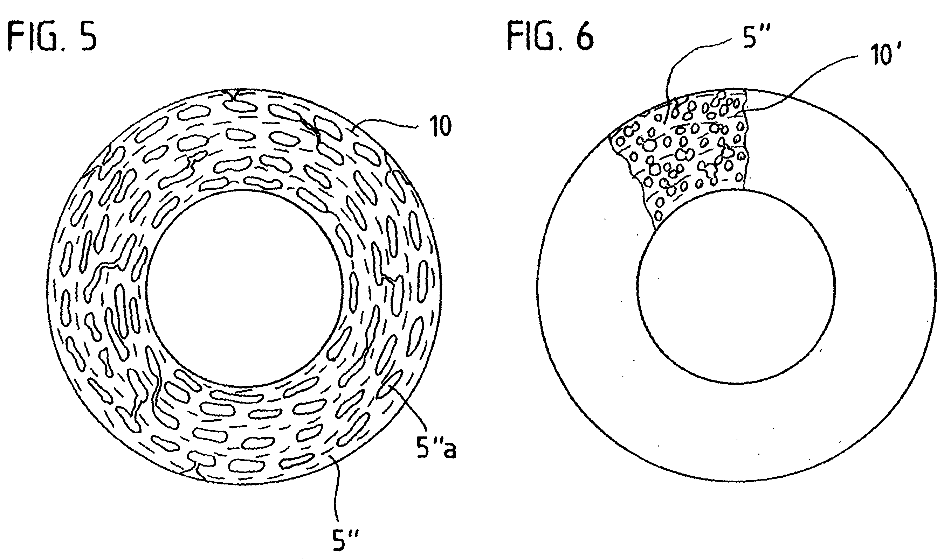

Zusätzlich kann, insbesondere bei Fahrzeugrädern, die für höhere Geschwindigkeiten geeignet sein sollen und für die somit die Fliehkraftaufnahme des schallabsorbierenden Einbaus entsprechend größer sein sollte, dem aufzuschäumenden Material vor oder mit der Zugabe der die Aufschäumung bewirkenden Zusätze, eine Faserpulpe beigemischt werden. Ein daraus entstehender Schaumstoffring 5" ist in Fig. 5 dargestellt. Während des Extrusionsprozesses werden die Fasern 10 ebenfalls vorrangig in eine Richtung, nämlich in die Richtung der länglichen Erstreckung der Poren 5"a, ausgerichtet und sie erhöhen somit deutlich die Steifigkeit und Festigkeit des Schaumstoffringes 5" in Umfangsrichtung ohne großen Zuwachs an Masse. Wegen der höheren. Zugsteifigkeit durch die Fasern 10 wird die Montage des Ringes 5" auf einer einteiligen Felge zwar erschwert, bleibt aber möglich, weil Faserbeimengungen in der Regel die Reißdehnung kaum verschlechtern. Wegen der nahezu unveränderten Weichheit des Ringes 5" in der radialen und der axialen Richtung und der allenfalls mittleren Weichheit in der axialen Richtung wäre zudem ein Montageverfahren denkbar, wo der Ring 5" unter Ausnutzung des Tiefbettes in Taumelstellung über das Felgenhorn gezogen würde.

Fig. 6 zeigt eine Ausführungsform eines Schaumstoffringes 5"', der zwar in Umfangsrichtung ausgerichtete Fasern 10' enthält, dessen Poren 5'"a jedoch keine bevorzugte Ausrichtung besitzen. Die Herstellung eines solchen Ringes 5''' ist beispielsweise derart möglich, daß das Aufschäumen des mit Fasern 10' versetzten Rohmaterials erst nach dem Durchtritt durch die Extruderdüse, wo eine entsprechende Ausrichtung der Fasern 10' erfolgt, stattfindet.

Mit einem entsprechend ausgebildeten Duplexextruder wäre es zudem auch möglich, eine radial äußere Schicht am Ring frei von verstärkenden Fasern zu halten, wobei diese Schicht bei felgennaher Anordnung eher dünn zu sein hat, beispielsweise 0,5 bis 2 mm, und bei laufflächennaher Anordnung beispielsweise 1 bis 6mm betragen kann. Dies erhöht die akustische Absorption.

Erwähnt sei, daß verschiedene Kombinationen der einzelnen Ausführungsbeispiele miteinander möglich sind, so kann beispielsweise eine Ausführung mit orientierten Poren und/oder Fasern mit einem umhüllenden Festigkeitsträger kombiniert werden. Auch wenn in den Ausführungsbeispielen nur felgennahe Anordnungen des schallabsorbierenden Einbaus dargestellt sind, ist die gegenständliche Erfindung nicht auf solche eingeschränkt. Auch bei einer laufflächennahen Anordnung, insbesondere einer Anordnung unmittelbar radial innerhalb des Laufstreifens, lassen sich erfindungsgemäß gestaltete Einbauten vorteilhaft einsetzen.

## Patentansprüche

1. Kraftfahrzeugrad mit einem auf einer Felge (1) aufgebrachten Reifen (4), wobei in dem von Felge und Reifen umschlossenen Innenraum, diesen ringförmig umlaufend, ein schallabsorbierendes Material aufweisender Einbau untergebracht ist, wobei der schallabsorbierende Einbau (5, 5", 7) mit einem zumindest in einer Richtung, insbesondere zumindest in der Umfangsrichtung des Reifens, zugfest ausgeführten und akustisch transparenten Festigkeitsträger (6, 10, 10') ausgerüstet ist, **dadurch gekennzeichnet, dass** der aufgebrachte dehnbare Festigkeitsträger den schalldämmenden Einbau zumindest in Umfangsrichtung unter Spannung setzt.

2. Kraftfahrzeugrad mit einem auf einer Felge (1) aufgebrachten Reifen (4), wobei in dem von Felge und Reifen umschlossenen Innenraum, diesen ringförmig umlaufend, ein schallabsorbierendes Material aufweisender Einbau untergebracht ist, **dadurch gekennzeichnet, daß** das schallabsorbierende Material des Einbaus (5', 5") ein offenporiger Schaumstoff ist, dessen Poren (5'a, 5"a) zum Großteil eine überwiegend in eine einzige Richtung - der Umfangsrichtung des Reifens - orientierte Erstreckung besitzen.

3. Kraftfahrzeugrad nach Anspruch 1 oder 2, **dadurch gekennzeichnet, daß** der bzw. ein Festigkeitsträger (6) die zum Reifeninnenraum offene Fläche des schallabsorbierenden Einbaus (5) zumindest über einen Teil seines Querschnittes umhüllt.

4. Kraftfahrzeugrad nach einem der Ansprüche 1 bis 3, **dadurch gekennzeichnet, daß** der Festigkeitsträger (6), in radialer Richtung betrachtet, in diskreten Abständen im schallabsorbierenden Einbau (7) angeordnet ist.

5. Kraftfahrzeugrad nach einem der Ansprüche 1 bis 4, **dadurch gekennzeichnet, daß** der Festigkeitsträger von im schallabsorbierenden Einbau (5'', 5''') verteilten Fasern (10 10'), die überwiegend in der Umfangsrichtung des Reifens orientiert sind, gebildet wird.

6. Kraftfahrzeugrad nach einem der Ansprüche 1 bis 5, **dadurch gekennzeichnet, daß** der Festigkeitsträger als netzartig ausgebildetes Gewebe (6) ausgestaltet ist.

7. Kraftfahrzeugrad nach Anspruch 6, **dadurch gekennzeichnet, daß** das Gewebe (6) mit in der Umfangsrichtung des Reifens verlaufenden zugfesten Fäden versehen ist.

8. Kraftfahrzeugrad nach einem der Ansprüche 1 bis 5, **dadurch gekennzeichnet, daß** der Festigkeitsträger als gelochte Folie ausgebildet ist.

9. Kraftfahrzeugrad nach Anspruch 8, **dadurch gekennzeichnet, daß** die Folie isotrop ausgeführt ist.

10. Kraftfahrzeugrad nach einem der Ansprüche 1 bis 9, **dadurch gekennzeichnet, daß** der schallabsorbierende Einbau als geschlossener Ring (5, 5',5", 5''', 7) ausgeführt ist.

11. Kraftfahrzeugrad nach Anspruch 10, **dadurch gekennzeichnet, daß** der geschlossene Ring von einem mehrfach ringförmig gewickelten Streifen (7) aus schalldämmenden Material gebildet ist.

12. Kraftfahrzeugrad nach Anspruch 11, **dadurch gekennzeichnet, daß** der Streifen (7) zumindest einseitig mit dem Festigkeitsträger (6) versehen ist.

13. Kraftfahrzeugrad nach einem der Ansprüche 10 bis 12, **dadurch gekennzeichnet, daß** der Festigkeitsträger (6) mit dem Ring (5, 5', 5", 5"') bzw. dem Streifen (7) verklebt, verschweißt oder dgl. ist.

14. Kraftfahrzeugrad nach einem der Ansprüche 1 bis 13, **dadurch gekennzeichnet, daß** schallabsorbierende Einbau bzw. der Ring (5, 5', 5") vor der Montage aus mehreren Umfangssegmenten (15) besteht, die nach der Montage zusammengefügt sind.

15. Kraftfahrzeugrad nach einem der Ansprüche 1 bis 14, **dadurch gekennzeichnet, dass** das schalldämmende Material für den Einbau ein bei thermischer Behandlung schrumpfbares ist.

## Claims

1. Automotive vehicle wheel having a tyre (4) mounted on a rim (1), an insert of sound-absorbent material being accommodated in the inner space enclosed by the rim and tyre and extending in an annular fashion around said space, said sound-absorbent insert (5,5",7) being equipped with an acoustically transparent strengthener (6,10,10') which has tensile strength at least in one direction, more especially at least in the circumferential direction of the tyre, **characterised in that** the applied tensible strengthener places the sound-reducing insert under tension at least in the circumferential direction.

2. Vehicle wheel having a tyre (4) mounted on a rim (1), an insert of sound-absorbent material being accommodated in the inner space enclosed by the rim and tyre and extending in an annular fashion around said space, **characterised in that** the sound-absorbent material of the insert (5', 5") is an open-pored foam material, the pores (5'a, 5"a) of which are for the most part oriented to extend predominantly in a single direction, the circumferential direction of the tyre.

3. Vehicle tyre according to claim 1 or 2, **characterised in that** the or a strengthener (6) wraps around the surface of the sound-absorbent insert which is open towards the tyre interior, at least over a portion of its cross-section.

4. Vehicle wheel according to one of claims 1 to 3, **characterised in that** the strengthener (6), when viewed in the radial direction, is disposed at discrete intervals in the sound-absorbent insert (7).

5. Vehicle wheel according to one of claims 1 to 4, **characterised in that** the strengthener is formed by fibres (10, 10') which are distributed in the sound-absorbent insert (5",5"') and oriented predominantly in the circumferential direction of the tyre.

6. Vehicle wheel according to one of claims 1 to 5, **characterised in that** the strengthener is embodied as a net-like woven fabric (6).

7. Vehicle wheel according to claim 6, **characterised in that** the woven fabric (6) is provided with threads which have tensile strength and extend in the circumferential direction of the tyre.

8. Vehicle wheel according to one of claims 1 to 5, **characterised in that** the strengthener is configured as a perforated foil.

9. Vehicle wheel according to claim 8, **characterised in that** the foil is designed isotropic.

10. Vehicle wheel according to one of claims 1 to 9, **characterised in that** the sound-absorbent insert is designed as a closed ring (5,5',5",5"',7).

11. Vehicle wheel according to claim 10, **characterised in that** the closed ring is formed from a strip (7) of sound-reducing material which is wound round several times in a ring shape.

12. Vehicle wheel according to claim 11, **characterised in that** the strip (7) is provided with the strengthener (6) at least on one side.

13. Vehicle wheel according to one of claims 10 to 12, **characterised in that** the strengthener (6) is glued, welded or the like to the ring (5,5',5",5"') or the strip (7).

14. Vehicle wheel according to one of claims 1 to 13, **characterised in that,** before assembly, the sound-absorbent insert or the ring (5,5',5") comprises a plurality of circumferential segments (15) which are joined together after assembly.

15. Vehicle wheel according to one of claims 1 to 14, **characterised in that** the sound-reducing material for the insert is one which can be shrunk during thermal treatment.

## Revendications

1. Roue d'un véhicule automobile comprenant un pneumatique (4) monté sur une jante (1), où une structure présentant un matériau absorbant les bruits est placée dans l'espace intérieur entouré par la jante et le pneumatique, ladite structure encerclant cet espace intérieur en formant un anneau, où la structure (5, 5", 7) absorbant les bruits est dotée, au moins dans une direction, en particulier au moins dans la direction circonférentielle du pneumatique, d'un élément de renfort (6, 10, 10') réalisé en étant résistant à la traction et acoustiquement transparent,
**caractérisée**
**en ce que** l'élément de renfort appliqué, dilatable, met sous tension la structure amortissant les bruits, au moins dans la direction circonférentielle.

2. Roue d'un véhicule automobile comprenant un pneumatique (4) monté sur une jante (1), où une structure présentant un matériau absorbant les bruits est placée dans l'espace intérieur entouré par la jante et le pneumatique, ladite structure encerclant cet espace intérieur en formant un anneau, **caractérisée en ce que** le matériau de la structure (5', 5"), absorbant les bruits, est une mousse à pores ouverts, mousse dont les pores (5'a, 5"a) ont, pour la plupart, un profil orienté principalement dans une seule direction, à savoir la direction circonférentielle du pneumatique.

3. Roue d'un véhicule automobile selon la revendication 1 ou 2, **caractérisée en ce que** l'élément de renfort ou un élément de renfort (6) enveloppe, au moins sur une partie de sa section, la surface de la structure (5) absorbant les bruits, ouverte vers l'espace intérieur du pneumatique.

4. Roue d'un véhicule automobile selon l'une des revendications 1 à 3, **caractérisée en ce que** l'élément de renfort (6) - en regardant en direction radiale - est disposé dans la structure (7) absorbant les bruits, suivant des intervalles discrets.

5. Roue d'un véhicule automobile selon l'une des revendications 1 à 4, **caractérisée en ce que** l'élément de renfort est formé par des fibres (10, 10') réparties dans la structure (5", 5''') absorbant les bruits, lesquelles fibres sont orientées, pour la plupart, dans la direction circonférentielle du pneumatique.

6. Roue d'un véhicule automobile selon l'une des revendications 1 à 5, **caractérisée en ce que** l'élément de renfort est conçu comme un tissu (6) formé de façon réticulée.

7. Roue d'un véhicule automobile selon la revendication 6, **caractérisée en ce que** le tissu (6) est doté de fils résistant à la traction et s'étendant dans la direction circonférentielle du pneumatique.

8. Roue d'un véhicule automobile selon l'une des revendications 1 à 5, **caractérisée en ce que** l'élément de renfort est conçu comme une feuille perforée.

9. Roue d'un véhicule automobile selon la revendication 8, **caractérisée en ce que** la feuille est réalisée en étant isotrope.

10. Roue d'un véhicule automobile selon l'une des revendications 1 à 9, **caractérisée en ce que** la structure absorbant les bruits est conçue comme un anneau fermé (5, 5', 5'', 5''', 7).

11. Roue d'un véhicule automobile selon la revendication 10, **caractérisée en ce que** l'anneau fermé est formé par une bande (7) d'un matériau absorbant les bruits, cette bande étant enroulée plusieurs fois en formant un anneau.

12. Roue d'un véhicule automobile selon la revendication 11, **caractérisée en ce que** la bande (7) est dotée, au moins sur un côté, de l'élément de renfort (6).

13. Roue d'un véhicule automobile selon l'une des revendications 10 à 12, **caractérisée en ce que** l'élément de renfort (6) est collé ou soudé, ou fixé de façon analogue, sur l'anneau (5, 5', 5", 5''') ou sur la bande (7).

14. Roue d'un véhicule automobile selon l'une des revendications 1 à 13, **caractérisée en ce que** la structure ou l'anneau absorbant les bruits (5, 5', 5'',) se compose, avant le montage, de plusieurs segments circonférentiels (15) qui sont réunis après le montage.

15. Roue d'un véhicule automobile selon l'une des revendications 1 à 14, **caractérisée en ce que** le matériau amortissant les bruits, utilisé pour la structure, est rendu rétractable lors d'un traitement thermique.
